(19) **Europäisches Patentamt**

**European Patent Office**

**Office européen des brevets**

(11) Veröffentlichungsnummer: **0 230 590 B1**

(12) **EUROPÄISCHE PATENTSCHRIFT**

(45) Veröffentlichungstag der Patentschrift: **29.01.92**

(21) Anmeldenummer: **86117279.9**

(22) Anmeldetag: **11.12.86**

(51) Int. Cl.⁵: **H04L 7/02**, H04L 7/10, G08C 23/00

(54) **Verfahren zur Takt-Regenerierung für die Decodierung eines digitalen Datensignals.**

(30) Priorität: **29.01.86 DE 3602554**

(43) Veröffentlichungstag der Anmeldung:
**05.08.87 Patentblatt 87/32**

(45) Bekanntmachung des Hinweises auf die
Patenterteilung:
**29.01.92 Patentblatt 92/05**

(84) Benannte Vertragsstaaten:
**DE FR GB IT**

(56) Entgegenhaltungen:
**US-A- 4 185 273**
**US-A- 4 317 211**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Elsässer, Dieter
Grundig E.M.V. Kurgartenstrasse 37
W-8510 Fürth(DE)**

**Beschreibung**

Die Erfindung betrifft ein Verfahren zur Takt-Regenerierung der im Oberbegriff des Patentanspruchs angegebenen Art.

Aus GRUNDIG Technische Informationen 3/1979, Seiten 93 bis 96, ist ein Infrarot-Fernbedienungssystem bekannt, bei dem eine Puls-Code-Modulation im sogenannten Biphase-Code zur Anwendung kommt. Diese Codierung zeichnet sich dadurch aus, daß jedes Bit des zu übertragenden, seriellen Datensignals aus zwei zueinander in einem konstanten Tastverhältnis stehenden Elementbits besteht, die grundsätzlich komplementäre logische Zustände aufweisen. Die Befehlsinformation liegt hierbei in den von Elementbit zu Elementbit vorliegenden Übergängen (High"→ "Low" oder "Low"→"High"). Der eigentlichen Nutzbitfolge ist noch eine Startbitfolge vorangestellt, die es dem Empfänger ermöglicht, die Verstärkung des Vorverstärkers geeignet zu regeln. Bei allen die Startbitfolge bildenden Bits ist hierbei dem jeweils zuerst übertragenen Elementbit ein gleicher logischer Pegel (z. B. "High") und dem jeweils nächstfolgenden Elementbit das zugehörige Komplement (z. B. "Low") zugeordnet.

Da bei dem bekannten Modulationsverfahren neben dem Datensignal kein gesondertes Taktsignal übertragen wird, stellt sich zur Erzielung einer fehlerfreien Decodierung der empfangenen Information die Frage nach einer geeigneten Takt-Regenerierung.

Eine bekannte Möglichkeit der Takt-Regenerierung besteht darin, nach Erkennen eines Startbits die Dauer für den augenblicklichen logischen Zustand zu bestimmen und diese nach ihrer Abspeicherung als Taktzeit solange zu wiederholen, bis ein mitlaufender Zähler die Anzahl der abzufragenden Informationsbits erreicht hat. Diese Methode ist jedoch sehr unzuverlässig, da innerhalb der Nutzbitfolge nur eine einmalige Triggerung stattfindet. Bei der Decodierung können insbesondere dann fehlerhafte Informationen entstehen, wenn das Tastverhältnis der beiden Halbbits ungleich eins ist.

Eine andere bekannte Möglichkeit der Taktrückgewinnung besteht darin, das Trägersignal bzw. die Modulation innerhalb eines Bits zu messen und bei dessen (deren) Erkennen den Zeittakt zu starten. Diese Methode ist zwar zuverlässig und erlaubt es, den Takt und die Triggerung nach jedem Bit zu generieren, hat jedoch den Nachteil, daß sehr kurze Zeiten sicher gemessen werden müssen, da das Trägersignal wesentlich hochfrequenter ist als die die Information enthaltende Nutzbitfolge. Demzufolge sind schnelle und teure Mikroprozessoren erforderlich, die auch speziell für diese Zwecke angeboten werden.

Der Erfindung liegt die Aufgabe zugrunde, ein Verfahren der im Oberbegriff des Patentanspruchs angegebenen Art zu schaffen, das eine Regenerierung des korrekten Zeittaktes, und zwar unabhängig von Frequenz und Tastverhältnis des gesendeten Biphase-Codes, und eine Triggerung bei jedem Bit der Codierung erlaubt.

Diese Aufgabe wird gemäß der Erfindung durch die im Kennzeichen des Patentanspruchs angegebenen Maßnahmen gelöst.

Das Verfahren gemäß der Erfindung hat den Vorteil, daß für eine sehr genaue Regenerierung des Zeittakts wesentlich langsamere und damit preiswertere Mikroprozessoren eingesetzt werden können.

Bei dem Verfahren gemäß der Erfindung werden in vorteilhafter Weise beim Empfang der Startbitfolge die Zeitabschnitte des ersten und zweiten logischen Pegels gemessen. Das für die Übertragung erforderliche Trägersignal wird vorher z. B. mit Hilfe eines RC-Filters ausgesiebt. Zur Regenerierung des Zeittaktes für das nachfolgend zu decodierende Nutzsignal werden beide Zeitwerte gespeichert. Beim Empfang der Nutzbitfolge wird bei jedem Übergang innerhalb der einzelnen Bits von Elementbit zu Elementbit ein Zeittakt gestartet, dessen Dauer entweder durch den ersten oder den zweiten gespeicherten Zeitwert festgelegt wird, jenachdem, ob das vor dem Start des Zeittaktes liegende erste Elementbit mit dem zweiten bzw. dem ersten logischen Pegel belegt ist.

Unter dem zu startenden Zeittakt ist somit diejenige Zeitspanne zu verstehen, nach der der Wert des jeweils nächsten Elementbits gemessen wird. War vor der zur Triggerung verwendeten Zustandsänderung (Pegeländerung innerhalb eines Bits) der Pegel z.B. "High", so entspricht die Zeit des Zeittaktes der bei der Startbitfolge gemessenen Zeit des Pegels "Low" und umgekehrt.

Somit ist auch bei einem Tastverhältnis ungleich eins für den gesendeten Biphase-Code stets eine fehlerfreie Decodierung der empfangenen digitalen Information gewährleistet.

**Patentansprüche**

1. Verfahren zur Takt-Regenerierung für die Decodierung eines digitalen Datensignals, das eine vorausgehende Startbitfolge und eine Nutzbitfolge umfaßt und ohne gesondertes Taktsignal übertragen wird, wobei jedes Start- und Nutzbit aus einem Paar zueinander komplementärer Elementbits besteht, die zueinander in einem konstanten Tastverhältnis stehen, wobei bei allen die Startbitfolge bildenden Bits dem jeweils zuerst übertragenen Elementbit ein gleicher logischer Pegel (erster Pegel) und dem jeweils nächstfolgenden Elementbit das zugehörige logische Komplement (zweiter Pe-

gel) zugeordnet ist, **dadurch gekennzeich-net,** daß beim Empfang der Startbitfolge die Zeitabschnitte des ersten und zweiten logischen Pegels gemessen werden, daß zur Regenerierung des Zeittaktes für das nachfolgend zu decodierende Nutzsignal beide Zeitwerte gespeichert werden, und daß beim Empfang der Nutzbitfolge bei jedem Übergang innerhalb der einzelnen Bits von Elementbit zu Elementbit ein Zeittakt gestartet wird, dessen Dauer entweder durch den ersten oder den zweiten gespeicherten Zeitwert festgelegt wird, jenachdem, ob das vor dem Start des Zeittaktes liegende erste Elementbit mit dem zweiten bzw. dem ersten logischen Pegel belegt ist.

## Claims

1. Method for clock regeneration for decoding a digital data signal which comprises a preceding start bit sequence and a useful-bit sequence and is transmitted without separate clock signal, each start and useful bit consisting of a pair of mutually complementary elemental bits which have a constant duty ratio with respect to one another, an identical logic level (first level) being allocated to the elemental bit first transmitted in each case in all bits forming the start bit sequence and the associated logic complement (second level) being allocated to the next elemental bit following in each case, characterised in that when the start bit sequence is received, the time intervals of the first and second logic level are measured, in that, in order to regenerate the timing clock for the useful signal to be subsequently decoded, both time values are stored, and in that when the useful-bit sequence is received, a timing clock is started with each transition from elemental bit to elemental bit within the individual bits, the duration of which is determined either by the first or the second stored time value depending on whether the first elemental bit located before the start of the timing clock has the second or the first logic level.

## Revendications

1. Procédé de régénération de la cadence pour le décodage d'un signal de données numérique, qui comprend une suite préalable de bits de départ et une suite de bits utile et est transmis sans signal de cadence particulier, et selon lequel chaque bit de démarrage et chaque bit utile sont constitués par un couple de bits élémentaires complémentaires l'un de l'autre, qui sont entre eux dans un rapport constant, et selon lequel dans tous les bits constituant la suite de bits de démarrage, un même niveau logique (premier niveau) est associé au bit élémentaire qui est respectivement tout d'abord transmis en premier, et le complément logique associé (second niveau) est associé à l'élément binaire respectivement immédiatement suivant, caractérisé en ce que, lors de la réception de la suite de bits de démarrage, les tranches temporelles des premier et second niveaux logiques sont mesurées, pour la régénération de la cadence temporelle pour le signal utile devant être décodé ensuite, les deux valeurs de temps sont mémorisées, et que lors de la réception de la suite de bits utiles, lors de chaque transition d'un bit élémentaire à un autre à l'intérieur des différents bits, une cadence temporelle est déclenchée, dont la durée est déterminée par la première ou par la seconde valeur de temps mémorisée, selon que le premier bit élémentaire présent avant le démarrage de la cadence temporelle possède le second ou premier niveau logique.